# EUROPÄISCHE PATENTANMELDUNG

(11) **EP 1 133 138 A2**
(43) Veröffentlichungstag der Anmeldung: **12.09.2001**
(21) Anmeldenummer: 01100283.9
(22) Anmeldetag: 04.01.2001
(51) Int. Cl.: H04M 3/42

(54) **Verfahren zum Konfigurieren eines Telekommunikationssystems, Vermittlungsanlage und Terminal zur Durchführung des Verfahrens**

(30) Priorität: 09.03.2000 DE 10011407
(71) Anmelder: Tenovis GmbH & Co. KG, 60362 Frankfurt am Main (DE)
(72) Erfinder: Kalunka, Berthold, 61231 Bad Nauheim (DE)
(74) Vertreter: Patentanwaltskanzlei WILHELM & BECK

(57) **Zusammenfassung**

Ein Telekommunikationssystem umfaßt eine Vermittlungsanlage (1) und wenigstens ein an die Vermittlungsanlage (1) angeschlossenes programmgesteuertes Terminal (2). Bei der Konfiguration des Telekommunikationssystems empfängt die Vermittlungsanlage (1) von dem Terminal (2) eine Information über die Eigenschaften des Terminals (2) , wählt anhand der empfangenen Information ein Steuerprogramm für das Terminal (2) aus einem Speicher (4) aus und überträgt es an dieses.

## Beschreibung

### Stand der Technik

Die vorliegende Erfindung betrifft ein Verfahren zum Konfigurieren eines Telekommunikationssystems, das eine Vermittlungsanlage und wenigstens ein an die Vermittlungsanlage angeschlossenes programmgesteuertes Terminal umfaßt. Sie betrifft ferner eine Vermittlungsanlage und ein Terminal, die zur Anwendung in einem solchen Telekommunikationssystem geeignet sind.

Terminals für moderne Telekommunikationssysteme unterstützen häufig unterschiedliche Dienste wie Sprach- und Datenübertragung, oder sie besitzen eine große Vielfalt sogenannter Komfortfunktionen, die dem Benutzer den Umgang mit den unterstützten Diensten erleichtern. Diese Eigenschaften der Terminals werden in der Regel durch eine aufwendige Programmsteuerung der Terminals implementiert. Dabei ist ein Steuerprogramm, das für die Steuerung eines ersten Terminals geeignet ist, in der Regel ungeeignet zur Steuerung eines zweiten Terminals, das in der Bauart abweicht, oder das nicht die gleichen Dienste und/oder Komfortfunktionen wie das erste Terminal unterstützt oder unterstützen soll. Im Interesse einer rationellen Fertigung kommt es häufig vor, daß Terminals, die sich in ihren Eigenschaften und Leistungsmerkmalen erheblich unterscheiden, eine völlig identische Hardware besitzen, und daß Unterschiede in den Leistungsmerkmalen der einzelnen Terminals nur dadurch zustande kommen, daß die Terminals jeweils mit unterschiedlichen Steuerprogrammen ausgestattet werden.

Das Ausrüsten der Terminals mit unterschiedlichen Versionen von Steuersoftware je nach gewünschten Leistungsmerkmalen ist ein Arbeitsgang, der einen erheblichen Zeit- und Verwaltungsaufwand mit sich bringt. Wenn die Terminals nicht auf Bestellung, sondern auf Vorrat gefertigt werden, bringt die große Zahl unterschiedlicher Versionen auch einen erheblichen Aufwand an Lagerhaltung mit sich, wodurch Kapital gebunden wird.

Es wäre daher für die Hersteller solcher Terminals von Vorteil, wenn die Versionenvielfalt der Terminals reduziert werden könnte. Andererseits würde eine solche Verringerung der Versionenvielfalt dazu führen, daß manche Leistungsmerkmale von Terminals nicht wirtschaftlich angeboten werden können, oder daß die Anwender der Terminals gezwungen sind, Terminals zu kaufen, die nicht nur die gewünschten Leistungsmerkmale aufweisen, sondern auch solche, die für sie nicht von Interesse sind, und gegebenenfalls nur den Umgang mit dem Terminal verkomplizieren.

Es sind Terminals bekannt, bei denen die Bestückung mit Steuersoftware nicht etwa durch Einbau eines spezifischen Programmspeichers im Laufe der Fertigung erfolgt, sondern durch Überspielen eines Steuerprogrammes in einen Speicher des Terminals nach dessen Zusammenbau. Auch hier ergibt sich jedoch das Problem, daß die Steuersoftware für jedes Terminal entsprechend seinen gewünschten Merkmalen spezifisch ausgewählt und noch beim Hersteller an das Terminal übertragen werden muß. Das Problem des Zeitaufwands beim Übertragen der Steuersoftware an jedes einzelne Terminal und des Verwaltungsaufwandes bei der Auswahl der entsprechenden Software in Abhängigkeit von einem Fertigungsplan oder den Vorgaben eines Kunden, bzw. die Notwendigkeit einer Bevorratung mit einer großen Vielfalt von Terminals unterschiedlicher Versionen bleibt somit bestehen.

### Vorteile der Erfindung

Durch die vorliegende Erfindung wird ein Verfahren zum Konfigurieren eines Telekommunikationssystems geschaffen, das es erlaubt, Telekommunikationssysteme aufzubauen, in denen Terminals mit einer großen Vielfalt unterschiedlicher Leistungsmerkmale zusammen arbeiten können, das aber den für die Steuerprogramm-Ausstattung der Terminals bislang notwendigen Zeit- und Verwaltungsaufwand überflüssig macht, und das die Lagerhaltung von Terminals mit einer Vielzahl unterschiedlicher Kombinationen von Leistungsmerkmalen überflüssig macht.
Diese Vorteile werden erreicht durch ein Verfahren zum Konfigurieren eines Telekommunikationssystems, das eine Vermittlungsanlage und wenigstens ein an die Vermittlungsanlage angeschlossenes programmgesteuertes Terminal umfaßt, wobei die Vermittlungsanlage von dem Terminal eine Information über die Eigenschaften des Terminals empfängt, wobei das Verfahren dadurch gekennzeichnet ist, daß anhand der von der Vermittlungsanlage empfangenen Information ein Steuerprogramm für das Terminal ausgewählt und von der Vermittlungsanlage an dieses übertragen wird.

Zweckmäßigerweise überprüft das Terminal, ob es über ein Steuerprogramm verfügt, und überträgt, wenn dies nicht der Fall ist, die Information selbsttätig an die Vermittlungsanlage.

Diese Information umfaßt zweckmäßiger Weise eine komplette Beschreibung des Terminals, das heißt eine eindeutige Spezifikation des Hardware-Typs des Terminals sowie seiner gewünschten, durch das Steuerprogramm zu implementierenden Leistungsmerkmale.

Ein solches Terminal kann an den Benutzer mit einer minimalen Programmausstattung, einem sogenannten Urlader, ausgeliefert werden, wobei der Urlader lediglich in der Lage sein muß, die besagte Information an die Vermittlungsanlage zu übertragen, ein Steuerprogramm von dieser zu empfangen, und für den nachfolgenden Normalbetrieb des Terminals die Kontrolle über das Terminal an das Steuerprogramm zu übergeben.

Derweil ist es zweckmäßig, wenn die Vermittlungsanlage nach Empfang der Information von einem Terminal eine vorgegebene Zeitspanne abwartet, bevor sie das Steuerprogramm an das Terminal überträgt, um in dieser Zeit auch von eventuellen anderen Terminals eintreffende Informationen empfangen zu können. Dadurch wird erreicht, daß, wenn eine Vielzahl von Terminals mit Steuerprogrammen versorgt werden müssen, etwa bei der Neuinbetriebnahme eines Telekommunikationssystems oder weil infolge eines Stromausfalls oder einer anderen technischen Panne Steuerprogramme bei den Terminals verloren gegangen sind, die Informationen aller Terminals innerhalb kurzer Zeit an die Vermittlungsanlage übertragen werden können. Dadurch ist die Vermittlungsanlage zum Beispiel in der Lage, wenn unterschiedliche Prioritäten oder Wichtigkeiten für verschiedene angeschlossene Terminals festgelegt worden sind, diejenigen mit höchster Priorität zuerst mit einem neuen Steuerprogramm zu versorgen und sie damit funktionsfähig zu machen.

Gemäß einer weiteren vorteilhaften Weiterentwicklung ist vorgesehen, daß in der Vermittlungsanlage Listen von Terminals angelegt werden, die jeweils gleiche Informationen gesendet haben, die also mit identischen Steuerprogrammen versorgt werden müssen, und daß das anhand der einer Liste zugeordneten Information ausgewählte Steuerprogramm parallel an alle Terminals der Liste übertragen wird. Auf diese Weise läßt sich der zum Konfigurieren des gesamten Telekommunikationssystems erforderliche Zeitaufwand erheblich reduzieren. Auch eine nachträgliche Aktualisierung der Steuerprogramme von bereits installierten und funktionsfähigen Terminals ist auf diese Weise möglich.

Eine wichtige Anwendung des Verfahrens ist bei der Inbetriebnahme neuer Terminals an einem bereits existierenden Telekommunikationssystem. Für diese Anwendung ist es von Vorteil, daß jedes Terminal die Information an die Vermittlungsanlage sendet, unverzüglich nachdem es an dieser in Betrieb genommen worden ist. Dieser Vorgang kann auf einfache Weise initiiert werden durch das Einstecken eines Verbindungssteckers des Terminals in eine Dose einer zur Vermittlungsanlage führenden Leitung, z. B. indem das Terminal das Anliegen eines Signals oder einer Versorgungsspannung auf dieser Leitung erfaßt.

Eine weitere wichtige Anwendung ist die Konfiguration völlig neu installierter Telekommunikationssysteme. Hier ist es zweckmäßig, daß jedes Terminal die Informationen an die Vermittlungsanlage sendet, unverzüglich nachdem letztere in Betrieb genommen worden ist. Dies kann in einfacher Weise dadurch geschehen, daß Vermittlungsanlage, sobald sie eingeschaltet wird, das oben erwähnte Signal bzw. die oben erwähnte Versorgungsspannung ausgibt und diese von dem Terminal erfaßt wird.

Wenn das Verfahren für die Erstkonfiguration eines Telekommunikationssystems angewendet wird, ist es zweckmäßig, daß jede Liste gelöscht oder als erledigt gekennzeichnet wird, nachdem ein Steuerprogramm an die Terminals der Liste übertragen worden ist, um so zu verhindern, daß die Steuerprogramme mehrfach übertragen werden. Wenn die Liste gespeichert bleibt, so hat dies ferner den Vorteil, daß es möglich ist, die Steuerprogramme von an der Anlage in Betrieb befindlichen Terminals nachträglich mit Hilfe dieser Liste zu aktualisieren.

Für Wartungszwecke ist es ferner vorteilhaft, wenn die gespeicherte Liste zu jedem Terminal einen Speicherplatz aufweist, in dem aufgezeichnet werden kann, ob ein Versuch, die Steuersoftware in das Terminal zu laden, Erfolg hatte oder nicht.

Wenn an der Vermittlungsanlage mehrere Listen von mit Steuerprogrammen zu versorgenden Terminals vorhanden sind, ist es ferner vorteilhaft, wenn die Vermittlungsanlage zuerst diejenigen Terminals versorgt, die der Liste mit den meisten Elementen angehören. Auf diese Weise kann die größtmögliche Zahl von Terminals an der Anlage in kürzester Zeit betriebsbereit gemacht werden.

Gegenstand der Erfindung ist ferner eine Vermittlungsanlage für ein Telekommunikationssstem, die insbesondere zur Durchführung eines Verfahrens wie oben beschrieben geeignet ist. Dieser Vermittlungsanlage ist ein Speicher für Steuerprogramme für an sie anschließbare Terminals zugeordnet.

Dieser Speicher kann ein lokaler Massenspeicher der Vermittlungsanlage sein. Es kann sich aber auch um einen mit der Vermittlungsanlage durch Datenfernübertragung verbindbaren Speicher handeln.

Weiter ist Gegenstand der Erfindung ein Terminal für ein Telekommunikationssystem, daß eine Steuereinheit aufweist, die in der Lage ist zu überprüfen, ob ein vollständiges Steuerprogramm für das Terminal in dem Terminal vorhanden ist, und im Falle des Nichtvorhandenseins die Information auszusenden. Die Steuereinheit sendet die Information zweckmäßigerweise über die gleiche Leitung, über die auch im Betrieb des Telekommunikationssystems der Nachrichtenverkehr zwischen dem Terminal und der Vermittlungsanlage stattfindet.

Weitere Merkmale und Vorteile der Erfindung ergeben sich aus der nachfolgenden Beschreibung eines Ausführungsbeispiels mit Bezug auf die beigefügten Figuren.

### Figuren

Fig. 1 und 2 zeigen jeweils Blockdiagramme eines Telekommunikationssystems gemäß der vorliegenden Erfindung;

Fig. 3 zeigt ein Flußdiagramm eines von der Vermittlungsanlage des Telekommunikationssystems ausgeführten Programmes zur Konfigurierung der Telekommunikationsanlage.

### Beschreibung der Ausführungsbeispiele

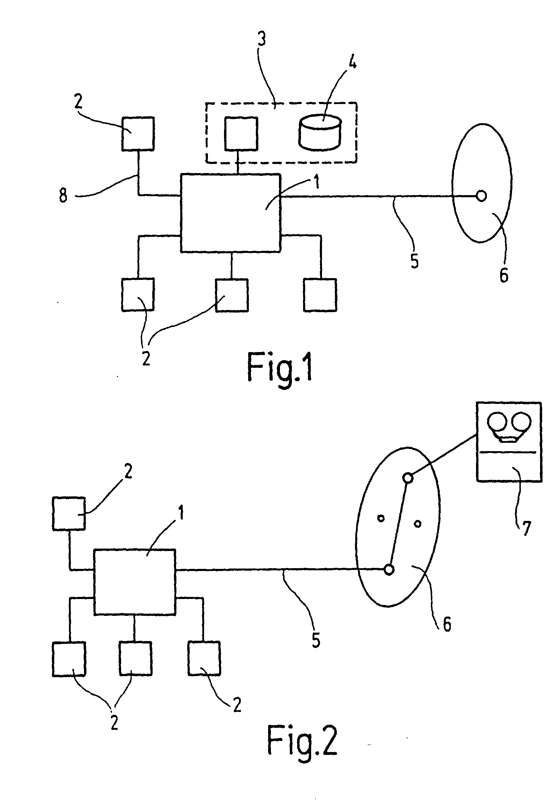

Die Grundstruktur des in Fig. 1 dargestellten Telekommunikationssystems ist an sich bekannt und braucht daher nicht im Detail geschildert zu werden. Das System umfaßt eine digitale Vermittlungsanlage 1, an die eine Mehrzahl von Terminals 2 angeschlossen sind, und die Kommunikationsverbindungen der Terminals 2 miteinander, oder, über eine Leitung 5 und ein öffentliches Telekommunikationsnetz 6, mit einem entfernten Teilnehmer herstellt. An die Vermittlungsanlage 1 ist ein Konfigurationscomputer 3 angeschlossen, z.B. ein tragbarer PC, der einen Massenspeicher 4, z.B. eine Festplatte oder ein Laufwerk mit einer CD besitzt, auf der eine Vielzahl unterschiedlicher Versionen von Steuerprogrammen für alle Typen von an die Vermittlungsanlage 1 anschließbaren Terminals gespeichert sind.

Die Terminals 2 besitzen jeweils einen programmgesteuerten Prozessor und einen Programmspeicher. Wenigstens ein Teil dieses Speichers ist ein flüchtiger RAM-Speicher oder besser noch ein EEPROM zur Aufnahme des Steuerprogramms des Terminals. Vor ihrer Inbetriebnahme an der Vermittlungsanlage 1 enthalten die Terminals 2 noch kein vollständiges Steuerprogramm. Sie besitzen lediglich einen Urlader, der eine Information aussendet, die das Modell des Terminals, genauer gesagt seine apparative Ausstattung und die gewünschten, durch das Steuerprogramm implementierten Merkmale, die das Terminal haben soll, eindeutig kennzeichnet. Zum Aussenden dieser Information verwendet der Urlader die gleiche physikalische Leitung 8, auf der später die Kommunikation zwischen dem Terminal 2 und der Vermittlungsanlage 1 stattfinden soll. In dem Fall, daß die Leitung 8 mehrere Übertragungskanäle unterstützt, wie etwa B-Kanäle und D-Kanal bei einem ISDN-Telekommunikationssystem, können auch die zur Übertragung der Information und die spätere Kommunikation verwendeten Kanäle die gleichen sein, denn da eine Kommunikation noch nicht stattfinden kann, solange das Terminal kein Steuerprogramm hat, sind Konflikte beim Zugriff auf die Leitung bzw. den Kanal ausgeschlossen.

Der Urlader ist ferner in der Lage, ein auf der Leitung 8 an das Terminal 2 übertragenes Steuerprogramm in den Programmspeicher des Terminals 2 einzutragen und anschließend die Kontrolle über das Terminal an dieses Steuerprogramm zu übergeben. Es kann vorgesehen werden, daß der Urlader den Empfang des Steuerprogramms durch ein an die Vermittlungsanlage zurückgesandtes Bestätigungssignal quittiert.

Wenn der Urlader nach Aussenden der Information kein Steuerprogramm übertragen bekommt, wiederholt er in regelmäßigen Zeitabständen die Aussendung der Information. Ein solcher Zeitabstand kann mehrere Minuten, zum Beispiel ca. 30 Minuten oder gar eine Stunde, betragen. Durch diesen großen Zeitabstand ist sichergestellt, daß während der Inbetriebnahme eines umfangreichen privaten Telekommunikationssystems, das Hunderte bis Tausende von Terminals umfassen kann, noch nicht programmierte Terminals durch Aussenden ihrer Information nicht das Netz überlasten und gegebenenfalls an die gleiche Vermittlungsanlage angeschlossene, bereits programmierte und einsatzfähige Terminals blockieren. Des weiteren kann der Zeitabstand von Endgerät zu Endgerät geringfügig variieren, so daß, falls es beim ersten Anschalten der Vermittlungsanlage durch die große Zahl von gleichzeitig ihre Information aussendenden Terminals zu einer Überlastung gekommen ist, sich die zweiten Versuche dieser Terminals, ihre Information zu senden, über eine größere Zeitspanne verteilen und dann von der Vermittlungsanlage ohne Schwierigkeiten verarbeitet werden können.

Nach Übergabe der Kontrolle an das Steuerprogramm bleibt der zweckmäßigerweise in einem nichtflüchtigen Speicher wie etwa einem EPROM untergebrachte Urlader erhalten. So kann er, wenn zum Beispiel aufgrund einer Störung das Steuerprogramm verlorengegangen ist, die Kontrolle über das Terminal erneut übernehmen und die Aussendung der Information wiederholen, um so ein neues Steuerprogramm von der Vermittlungsanlage anzufordern.

Eine weitere Funktion des Urladers, die dieser auch bei laufendem Steuerprogramm weiter versieht, ist das Überwachen der Leitung 8 auf Signale der Vermittlungsanlage, die ankündigen, daß diese das im Terminal vorhandene Steuerprogramm ändern bzw. ersetzen will. In einem solchen Fall übernimmt der Urlader wieder die Kontrolle über das Terminal, signalisiert der Vermittlungsanlage seine Empfangsbereitschaft. Daraufhin und empfängt er ein von dort übertragenes Steuerprogramm und setzt es in Gang, wie oben bereits beschrieben.

Fig. 2 zeigt eine Abwandlung des Telekommunikationssystems aus Fig. 1, bei dem der PC 3 entfallen ist. An seiner Stelle ist ein Hostrechner 7 vorgesehen, der mit der Vermittlungsanlage 1 per Datenfernübertragung über das öffentliche Netz 6 verbindbar ist, um Steuerprogramme für die verschiedenen Terminals 2 von dort zu laden. Bei dem Host-rechner 7 kann es sich z.B. um einen Rechner des Herstellers der Vermittlungsanlage 1 oder der Terminals 2 handeln, der eine vollständige Sammlung von Steuerprogrammen für jede beliebige Modellvariante der Terminals 2 bereithält. Eine Rufnummer des Hostrechners 7, über die dieser beispielsweise per ISDN-File Transfer zugänglich ist, kann in der Vermittlungsanlage 1 abgespeichert sein, so daß diese bei ihrer Inbetriebnahme oder bei Hinzufügung eines neuen Terminals 2 in der Lage ist, ohne Unterstützung durch einen Techniker die Übertragungsverbindung zum Hostrechner 7 aufzubauen und das benötigte Steuerprogramm von dort zu laden. Alternativ kann der Zugriff der Vermittlungsanlage 1 auf den Host 7 auch über das Internet erfolgen.

Bei den Telekommunikationssystemen der Figuren 1 und 2 stellen jeweils die Massenspeicher des PCs 4 oder des Host-Rechners 7 der Vermittlungsanlage 1 zugeordnete Massenspeicher dar, von denen diese Steuerprogramme entsprechend der von den angeschlossenen Terminals 2 empfangenen Informationen abfragt. Hierfür ist erforderlich, daß immer dann, wenn ein Terminal programmiert werden muß, der PC 4 an die Vermittlungsanlage 1 angeschlossen sein muß beziehungsweise eine Download-Verbindung zum Host-Rechner 7 zur Verfügung stehen muß. Dies kann insbesondere bei großen privaten Telekommunikationssystemen, bei denen häufig Terminals ausgetauscht, neu installiert oder verlegt werden, sehr oft der Fall sein. Da außerdem die Entfernung zwischen Terminal und Vermittlungsanlage erheblich sein kann, kann dies bei Verwendung eines PCs 4 bedeuten, daß dieser praktisch ständig an die Vermittlungsanlage 1 angeschlossen sein muß und dadurch nicht für andere Aufgaben zur Verfügung steht. Um diese Einschränkung zu überwinden, ist bei einer bevorzugten Ausgestaltung der Vermittlungsanlage vorgesehen, daß diese über einen eigenen Massenspeicher, zweckmäßigerweise in Form einer Festplatte, verfügt, auf die ein kompletter Satz von Steuerprogrammen bei Auslieferung der Vermittlungsanlage aufgespielt ist, und von dem aus die Steuerprogramme an die Terminals übertragen werden. Selbstverständlich können die Steuerprogramme auf dieser Festplatte bei Bedarf aktualisiert werden, etwa durch Überspielen von dem PC 4 oder dem Host-Rechner 7. Derartige Aktualisierungen sind jedoch wesentlich seltener als Programmiervorgänge einzelner Terminals.

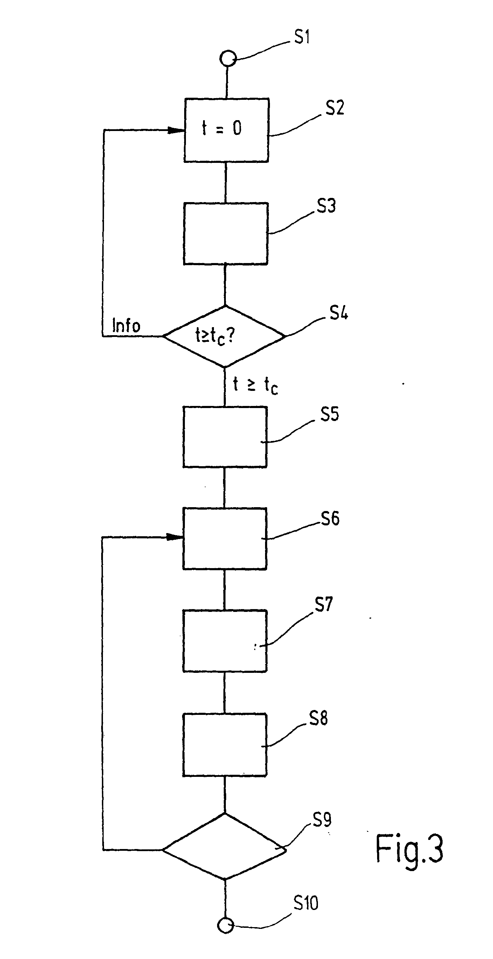

Fig. 3 zeigt im Detail den Ablauf des von der Vermittlungsanlage 1 abgearbeiteten Verfahrens anhand eines Flußdiagramms. Ausgangspunkt S1 des Verfahrens kann z.B. der Zeitpunkt sein, an dem eine bei einem Anwender neu installierte Telekommunikationsanlage zum ersten Mal in Betrieb genommen wird. Dieser Fall soll zunächst betrachtet werden.

Wenn eine solche Anlage neu installiert worden ist, verfügt die Vermittlungsanlage 1 noch über keinerlei Informationen über die an sie angeschlossenen Terminals. Die Terminals haben noch keine Steuerprogramme, sondern lediglich Urlader. Sobald die Vermittlungsanlage mit Betriebsspannung versorgt wird, ist sie bereit, von den an sie angeschlossenen Terminals Informationen über deren technische Eigenschaften, Leistungsmerkmale etc. zu empfangen. Die Terminals 2 erkennen dies an über die Leitung 8 an sie übertragenen Signal der Vermittlungsanlage. Bei diesem Signal kann es sich um die über die Vermittlungsanlage 1 zur Verfügung gestellte Versorgungsspannung der Terminals handeln. Dieser Bereitschaftszustand der Vermittlungsanlage entspricht dem Ausgangspunkt S1 des Verfahrens.

Sobald die Vermittlungsanlage eine Information über die technischen Eigenschaften eines Terminals von diesem empfängt, setzt sie in Schritt S2 einen eingebauten Zeitschalter in Gang. Anschließend richtet die Vermittlungsanlage 1 in einem Speicher eine Liste ein (Schritt S3), die durch die von dem Terminal empfangene Information identifiziert ist und zu jedem Terminal, das die betreffende Information gesendet hat, eine Adresse oder eine beliebige Form von eindeutiger Bezeichnung des Terminals enthält. Gemäß einer vorteilhaften Weiterentwicklung enthält die Liste ferner zu jedem Terminal einen Speicherplatz für ein Statusflag, das den Zustand "programmiert" oder "unprogrammiert" des Terminals angibt. Der Wert dieses Statusflags ist zunächst "unprogrammiert". Die Funktion des Statusflags wird an späterer Stelle beschrieben.

Anschließend, in Schritt S4, wartet die Vermittlungsanlage auf das Eintreffen weiterer Informationen von anderen angeschlossenen Terminals.

Wenn eine solche Information eintrifft, kehrt die Verarbeitung zurück zum Schritt S2, der Zeitschalter wird auf seinen Anfangswert zurückgesetzt, und das Terminal, das die Information gesendet hat, wird in eine Liste eingetragen (S3), die bereits vorhanden ist oder neu eingerichtet wird, je nachdem, ob die Vermittlungsanlage die gleiche Information bereits früher von einem anderen Terminal empfangen hat oder nicht.

Bei einer Neuinbetriebnahme empfängt die Vermittlungsanlage 1 diese Informationen von allen angeschlossenen programmgesteuerten Terminals 2. Durch mehrmaliges Ausführen der Schritte S2 bis S4 erzeugt sie somit Listen in einer Anzahl, die der Zahl unterschiedlicher Varianten von Terminals entspricht, die an der Anlage eingesetzt werden.

Wenn jedes Terminal seine Information erfolgreich an die Vermittlungsanlage gesendet hat, und somit keine weiteren Informationen eintreffen, endet der Schritt S4 mit dem Verstreichen der Verzögerungszeit t_{c}.

Das Verfahren geht nun zum Schritt S5 über, in dem die erzeugten Listen der Größe nach sortiert werden.

Anschließend, in Schritt S6, sendet die Vermittlungsanlage bei den in Figuren 1 und 2 dargestellten Telekommunikationssystemen die der längsten Liste zugeordnete Information an einen Computer, etwa den PC 3 oder den Hostrechner 7, der Zugriff auf den der Vermittlungsanlage zugeordneten Speicher mit den benötigten Steuerprogrammen hat. Dieser Computer wählt aus dem Speicher das benötigte Steuerprogramm aus und überträgt es zur Vermittlungsanlage 1. Wenn die Vermittlungsanlage über ihren eigenen Massenspeicher verfügt, nimmt sie die Auswahl des benötigten Steuerprogramms in diesem Massenspeicher selbst vor. Anschließend leitet sie das Programm an alle Terminals der Liste gleichzeitig weiter (S7). Damit ist die betreffende Liste abgearbeitet und wird aus dem Speicher der Vermittlungsanlage 1 gelöscht (S8). Sofern noch Listen im Speicher der Vermittlungsanlage vorhanden sind, kehrt die Verarbeitung in Schritt S9 zurück zu Schritt S6, und es wird wiederum das Steuerprogramm für die nun verbleibende längste Liste vom Computer abgefragt.

Wenn keine Listen mehr vorhanden sind, so bedeutet dies, daß alle Terminals, die Informationen an die Vermittlungsanlage gesendet haben, ein Steuerprogramm erhalten haben, und daß das Telekommunikationssystem vollständig konfiguriert ist. Das Verfahren endet somit mit Schritt S10, und der normale Betrieb der Telekommunikationsanlage kann beginnen.

Bei einer weiterentwickelten Ausgestaltung des Verfahrens werden die Listen in Schritt S8 nicht gelöscht, sondern lediglich mit einem Kennzeichen versehen, welches angibt, daß die Liste abgearbeitet worden ist. Somit stehen auch während des späteren Betriebs des Telekommunikationssystems in der Vermittlungsanlage ständig Listen zur Verfügung, die angeben, welche der angeschlossenen Terminals 1 zu einer bestimmten Version gehören oder einen bestimmten Satz von Leistungsmerkmalen aufweisen. Dadurch wird die spätere Wartung des Telekommunikationssystems in mehrfacher Hinsicht vereinfacht.

Eine erste Vereinfachung ergibt sich in Zusammenhang mit der Herausgabe von aktualisierten Steuerprogrammen für die Terminals. Wenn nämlich der Hersteller neue Steuerprogramme herausbringt, etwa um einen bei der Erstinstallation des Terminals unerkannten Fehler eines Steuerprogramms zu beseitigen oder die Effektivität der Terminals generell zu verbessern, so kann er einen neuen Satz Steuerprogramme auf einem Datenträger wie etwa einer CD-ROM oder per Datenfernübertragung, etwa über eine ISDN-Verbindung, an die Betreiber der Telekommunikationsanlagen ausliefern, ein Betreiber kann seinen PC 3 an die Vermittlungsanlage 1 anschließen, die "verarbeitet" Kennzeichnung der einzelnen Listen wird zurückgesetzt, und die Verarbeitungsschleife mit den Schritten S6 bis S9 wird auf Grundlage der neu ausgelieferten Steuerprogramme wiederholt.

Wenn neue Steuerprogramme nur einen Teil der auf dem Markt befindlichen Versionen von Terminals betreffen, kann der Datenträger auch mit einer Information darüber versehen sein, welche Terminalversionen von der Aktualisierung betroffen sind, und die Vermittlungsanlage empfängt diese Information und setzt daraufhin nur das "verarbeitet"-Kennzeichen derjenigen Listen zurück, die von der Aktualisierung betroffen sind. In einem solchen Fall, werden neue Steuerprogramme nicht an alle Terminals überspielt, sondern nur an diejenigen, deren Steuerprogramm tatsächlich geändert werden muß. Auf diese Weise läßt sich die Wartung beschleunigen.

Eine ähnliche Wartung ist selbstverständlich auch dann möglich, wenn die Steuerprogramme von einem entfernten Host 7 per Datenfernübertragung zur Vermittlungsanlage 1 übertragen werden. In diesem Fall ist sogar noch eine aktuellere Wartung als im zuvor beschriebenen Fall möglich, z.B. dadurch, daß die Vermittlungsanlage in regelmäßigen Zeitabständen beim Host 7 anfragt, ob Aktualisierungen vorliegen, gegebenenfalls das "verarbeitet"-Kennzeichen der zu aktualisierenden Terminals zurücksetzt, und die Schritte S6 bis S10 wiederholt. Dies kann selbstverständlich auch dann geschehen, wenn nur eine einzige Terminalversion von der Aktualisierung betroffen ist.

Eine andere Möglichkeit ist, daß die einzelnen Vermittlungsanlagen 1 bei dem ihnen zugeordneten Host-rechner 7 registriert sind, und daß dieser, sobald eine Aktualisierung eines Steuerprogramms vorliegt, die Version des von der Aktualisierung betroffenen Terminals mitteilt, woraufhin die Vermittlungsanlagen überprüfen, ob bei ihnen eine Liste mit der entsprechenden Versionsbezeichnung gespeichert ist, gegebenenfalls deren "verarbeitet"-Kennzeichen zurücksetzen und die Schritte S6 bis S10 wiederholen.

Eine zweite Vereinfachung resultiert in Verbindung mit den oben erwähnten Statusflags der einzelnen Terminals 2. Diese befinden sich, wie gesagt, im Zustand "unprogrammiert", wenn ein Terminal 2 neu in eine Liste eingetragen wird. Wenn nach vollzogenem Empfang des Steuerprogramms durch ein Terminal dieses den Empfang der Vermittlungsanlage 1 quittiert, setzt die Vermittlungsanlage 1 das entsprechende Statusflag auf "programmiert". Wenn nach Inbetriebnahme der Vermittlungsanlage 1 und Abarbeitung der oben beschriebenen Schritte S1 bis S10 einzelne Terminals 2 der Telekommunikationsanlage nicht arbeiten, so kann ein Wartungstechniker die Listen in der Vermittlungsanlage 1 zentral abfragen und erkennen, ob bei einzelnen Terminals die Programmierung gescheitert ist, ohne die einzelnen Terminals aufsuchen zu müssen.

Das Verfahren eignet sich auch für die Konfigurierung von neu in Betrieb genommenen Terminals an einer bereits in Betrieb befindlichen Vermittlungsanlage. Sobald ein solches neues Terminal mit Betriebsspannung versorgt ist, was sehr einfach durch Einstecken eines Verbindungssteckers des Terminals in eine Dose der zur Vermittlungsanlage 1 führenden Leitung 8 geschieht, beginnt der Prozessor mit der Abarbeitung des Urladers, und die Information über die technischen Eigenschaften wird gesendet. Die Vermittlungsanlage führt die Verfahrensschritte S1 bis S4 aus. Wenn nur ein einzelnes Terminal neu installiert wird, trifft keine Information von anderen Terminals ein. Deshalb werden diese Schritte nicht mehrfach wiederholt, sondern nach Verstreichen der Verzögerung geht die Verarbeitung direkt zu den Schritten S5 ff. über. Da nur eine Information empfangen wurde, entfällt das Einsortieren in Listen, und es wird in Schritt S7 das benötigte Steuerprogramm aus dem Speicher abgefragt und an das Terminal übertragen. Wenn mehrere Terminals gleichzeitig neu in Betrieb genommen werden, entspricht der Verfahrensablauf genau dem oben für die Neuinbetriebnahme einer Anlage beschriebenen.

Selbstverständlich ist die Anwendbarkeit des oben beschriebenen Verfahrens nicht auf die Erstinbetriebnahme eines Terminals oder einer Vermittlungsanlage und deren Wartung beschränkt. So kann insbesondere bei Terminals, deren Leistungsmerkmale zum Teil allein durch ihr Steuerprogramm bestimmt sind, das Bedürfnis bestehen, die an einem Terminal zur Verfügung stehenden Leistungsmerkmale von Zeit zu Zeit an den aktuellen Bedarf des Benutzers, bzw. die Verwendung des Terminals anzupassen. Dies kann bei einem erfindungsgemäßen Terminal dadurch geschehen, daß eine Wartungsperson eine Information, die die gewünschten Leistungsmerkmale definiert, in das Terminal eingibt. Das Terminal kann zu diesem Zeitpunkt im Kommunikationssystem installiert sein, muß es aber nicht. Wenn es installiert ist, sendet es mit Abschluß der Eingabe der Information durch die Bedienungsperson diese Information weiter an die Vermittlungsanlage 1, die daraufhin das mit Bezug auf Figur 3 beschriebene Verfahren von Schritt 1 bis Schritt 10 abarbeitet. Wenn das Terminal zum Zeitpunkt der Eingabe der Informationen nicht installiert ist, so überträgt es, genau wie im Fall der Neuinbetriebnahme eines Terminals, diese Information an die Vermittlungsanlage, sobald es an diese angeschlossen ist.

Wenn ein Terminal durch Aufspielen eines neuen Steuerprogramms zusätzliche Leistungsmerkmale erhalten soll, ergibt sich für Anwender und Hersteller ein zusätzlicher Nutzeffekt aus der Verwendung eines entfernten Hostrechners 7 zur Versorgung mit den Steuerprogrammen. Hierzu muß vorgesehen werden, daß sich jede Vermittlungsanlage 1 gegenüber dem Hostrechner 7 eindeutig ausweist, bevor sie Steuerprogramme übertragen erhält. So kann am Hostrechner anhand von dort über die betreffende Vermittlungsanlage geführten Aufzeichnungen überprüft werden, ob das gewünschte Steuerprogramm lediglich eine Aktualisierung eines Steuerprogramms ist, das bereits von einem Terminal des Systems genutzt wird, und das eventuell kostenlos abgegeben wird, oder ob das gewünschte Steuerprogramm neue Leistungsmerkmale enthält, die das betreffende Terminal vorher nicht aufgewiesen hat, wobei in diesem Fall das Steuerprogramm nur gegen Rechnungstellung übertragen wird. Eine solche Regelung gibt dem Hersteller die Möglichkeit, Terminals mit einfachen Leistungsmerkmalen preiswert auf den Markt zu bringen, und Komfort-Leistungsmerkmale, deren Implementierung erheblichen Entwicklungsaufwand erfordert und Kosten verursacht hat, nur gegen getrennte Rechnung abzugeben; für den Benutzer der Terminals ergibt sich umgekehrt der Vorteil, daß er einerseits eine Telekommunikationsanlage zunächst zu geringen Kosten aufbauen kann, und später völlige Freiheit hat, Leistungsmerkmale nach Bedarf innerhalb weniger Sekunden oder Minuten, je nach Zeitdauer der Übertragung des Steuerprogramms, hinzuzufügen.

Die gleichen Vorteile lassen sich bei einer Vermittlungsanlage mit eigenem Massenspeicher auf folgende Weise erzielen. Der Massenspeicher enthält sämtliche Versionen von Steuerprogrammen, die für die Terminals der Anlage verfügbar sind, einschließlich solcher Versionen, die Leistungsmerkmale unterstützen, die der Betreiber der Anlage nicht gekauft hat. Letztere sind zum Beispiel durch eine Verschlüsselung geschützt, so daß sie auch nicht durch Auslesen des Massenspeichers mit einem externen Computer für den Betreiber der Anlage zugänglich sind. Wenn der Betreiber derartige zusätzliche Leistungsmerkmale nutzen möchte, kann er vom Hersteller eine Codenummer kaufen, die an Tasten eines mit den zusätzlichen Leistungsmerkmalen auszurüstenden Terminal eingegeben werden kann, wodurch das Terminal befähigt wird, die dem gewünschten Steuerprogramm entsprechende Information an die Vermittlungsanlage zu senden und die Vermittlungsanlage veranlaßt wird, das betreffende Steuerprogramm an das Terminal zu übertragen.

## Patentansprüche

1. Verfahren zum Konfigurieren eines Telekommunikationssystems, das eine Vermittlungsanlage (1) und wenigstens ein an die Vermittlungsanlage (1) angeschlossenes programmgesteuertes Terminal (2) umfaßt, wobei die Vermittlungsanlage von dem Terminal (2) eine Information über die Eigenschaften des Terminals empfängt, **dadurch gekennzeichnet, daß** anhand der empfangenen Informationen ein Steuerprogramm für das Terminal (2) ausgewählt und an das Terminal (2) übertragen wird.

2. Verfahren nach Anspruch 1, **dadurch gekennzeichnet, daß** das Terminal (2) erkennt, ob es über ein Steuerprogramm verfügt und, wenn dies nicht der Fall ist, die Information selbsttätig an die Vermittlungsanlage (1) überträgt.

3. Verfahren nach Anspruch 1 oder 2, **dadurch gekennzeichnet, daß** die Vermittlungsanlage (1) nach Empfang der Information von einem Terminal (2) während einer vorgegebenen Zeitspanne (t_{c}) das Eintreffen von Informationen über die Eigenschaften anderer Terminals abwartet.

4. Verfahren nach Anspruch 3, **dadurch gekennzeichnet, daß** in der Vermittlungsanlage (1) Listen von Terminals angelegt werden, die gleiche Informationen gesendet haben, und daß das anhand der Information ausgewählte Steuerprogramm parallel an alle Terminals (2) der Liste übertragen wird.

5. Verfahren nach Anspruch 4, **dadurch gekennzeichnet, daß** die Liste nach Übertragung des Steuerprogramms gelöscht oder als verarbeitet gekennzeichnet wird.

6. Verfahren nach Anspruch 4, **dadurch gekennzeichnet, daß** die Liste nach Übertragung des Steuerprogramms gespeichert bleibt.

7. Verfahren nach Anspruch 6, **dadurch gekennzeichnet, daß** die Liste zu jedem Terminal einen Speicherplatz umfaßt, und daß in diesem Speicherplatz aufgezeichnet wird, ob ein Versuch, das Steuerprogramm in das Terminal zu laden, Erfolg hatte oder nicht.

8. Verfahren nach einem der Ansprüche 4 bis 7, **dadurch gekennzeichnet, daß** die Vermittlungsanlage (1) unter mehreren Listen von mit Steuerprogrammen zu versorgenden Terminals (2) zuerst diejenigen Terminals versorgt, die der Liste mit den meisten Elementen angehören.

9. Verfahren nach einem der vorhergegangenen Ansprüche, **dadurch gekennzeichnet, daß** jedes Terminal (2) die Information unverzüglich nach seiner Inbetriebnahme an der Vermittlungsanlage (1) an diese sendet.

10. Verfahren nach einem der vorhergehenden Ansprüche, **dadurch gekennzeichnet, daß** jedes Terminal (2) die Information an die Vermittlungsanlage (1) unverzüglich nach deren Inbetriebnahme sendet.

11. Verfahren nach einem der vorhergehenden Ansprüche, **dadurch gekennzeichnet, daß** das Terminal (2) den Empfang eines Steuerprogramms an die Vermittlungsanlage quittiert, und daß die Vermittlungsanlage den Empfang der Quittung aufzeichnet.

12. Vermittlungsanlage für ein Telekommunikationssystem, insbesondere zur Durchführung eines Verfahrens nach einem der vorhergehenden Ansprüche, **dadurch gekennzeichnet, daß** ihr ein Speicher (4) für Steuerprogramme für an sie anschließbare Terminals (2) zugeordnet ist.

13. Vermittlungsanlage nach Anspruch 12, **dadurch gekennzeichnet, daß** der Speicher ein lokaler Massenspeicher (4) an der Vermittlungsanlage ist.

14. Vermittlungsanlage nach Anspruch 12, **dadurch gekennzeichnet, daß** der Speicher ein mit der Vermittlungsanlage (1) per Datenfernübertragung verbindbarer entfernter Speicher ist.

15. Terminal für ein Telekommunikationssystem, insbesondere zur Durchführung eines Verfahrens nach einem der Ansprüche 1 bis 11, **gekennzeichnet durch** eine Steuereinheit zum Überprüfen des Vorhandenseins eines vollständigen Steuerprogramms für das Terminal und zum Aussenden einer Information über das Terminal im Falle des Nichtvorhandenseins eines vollständigen Steuerprogramms.

16. Terminal nach Anspruch 15, **dadurch gekennzeichnet, daß** es Eingabemittel zum Eingeben der auszusendenden Information über das Terminal durch einen Benutzer aufweist.
